# DEMANDE DE BREVET EUROPEEN

(11) **EP 3 588 009 A1**
(43) Date de publication de la demande: **01.01.2020**
(21) Numéro de dépôt: 19171016.9
(22) Date de dépôt: 25.04.2019
(51) Int. Cl.: G01C 21/36, G06T 3/00

(54) **PROCÉDÉ DE FOURNITURE D`AFFICHAGE CARTOGRAPHIQUE DANS UN VÉHICULE ET SYSTÈME D`AFFICHAGE CARTOGRAPHIQUE ASSOCIÉ**

(30) Priorité: 12.06.2018 FR 1855099
(71) Demandeur: RENAULT s.a.s., 92100 Boulogne-Billancourt (FR)
(72) Inventeur: Florentin, Benoit, 92300 Levallois Perret (FR); Masson, Yann, 93340 Le Raincy (FR); Gournay, Pierre Louis, 91140 Villebon sur Yvette (FR); Gatelet, Nathalie, 91620 Nozay (FR); Brajon, Thierry, 91470 Les Molières (FR); Audrain, Grégory, 92100 BOULOGNE-BILLANCOURT (FR)

(57) **Abrégé**

L'invention porte sur un procédé de fourniture d'affichage cartographique (100) dans un véhicule, le procédé comprenant une étape de génération d'une image d'affichage (100), l'image d'affichage comprenant une première partie (50) représentant une cartographie à une échelle prédéfinie d'une première zone de l'environnement véhicule, une deuxième partie (30, 40) représentant une cartographie d'une deuxième zone de l'environnement véhicule, une troisième partie (10, 20) représentant une cartographie d'une troisième zone de l'environnement véhicule, la troisième partie étant agrandie par rapport la première partie avec un coefficient d'agrandissement prédéfini, la deuxième partie étant agrandie par rapport à la première partie avec un coefficient d'agrandissement intermédiaire variant progressivement de manière à ce que la première partie, la deuxième partie et la troisième partie forment une image d'affichage continue déformée.

L'invention porte également sur un système comprenant module de génération d'une telle image d'affichage (100) continue déformée et un produit programme d'ordinateur.

## Description

L'invention concerne le domaine des systèmes de navigation pour véhicule automobile.

Les systèmes de navigation sont connus. Il est connu d'afficher dans un véhicule des données cartographiques représentant l'environnement du véhicule ainsi que de permettre à l'utilisateur de trouver sa route à partir de la position actuelle du véhicule et d'une position d'arrivée correspondant à sa destination. L'image d'affichage des systèmes de navigation représente l'environnement véhicule à une échelle prédéterminée. L'environnement proche du véhicule est affiché à la même échelle que l'environnement lointain du véhicule. Ainsi, aucune zone de l'environnement du véhicule n'est privilégiée. Cependant, il existe un besoin d'informer l'utilisateur sur l'environnement proche du véhicule, pour l'avertir par exemple d'un changement de direction, d'une zone de danger, d'un changement de vitesse maximale autorisée sur un tronçon de route, d'un véhicule stationné sur le bas-côté de la route ou tout simplement de rendre plus visible l'environnement proche du véhicule. L'image d'affichage des systèmes de navigation connus ne permet pas de satisfaire ce besoin de manière acceptable parce-que toute l'image d'affichage est à la même échelle, sans que soit privilégié l'environnement proche du véhicule.

Les systèmes d'aide à la conduite sont connus. Ils fournissent des informations provenant de capteurs localisés en divers endroits du véhicule et permettant d'améliorer le confort de conduite ainsi que la sécurité. Les informations fournies par les systèmes d'aide à la conduite sont des données environnementales concernant l'environnement proche du véhicule, généralement entre 100 mètres et 200 mètres autour du véhicule. Si on affiche des informations provenant des systèmes d'aide à la conduite sur une image cartographique d'un système de navigation connu de l'état de l'art, l'image d'affichage résultante n'est pas très lisible. Si l'image d'affichage représente à la fois l'environnement proche et l'environnement lointain du véhicule, l'affichage des informations d'aide à la conduite est ou bien de très petite fonte de caractères, ou bien cache une partie des routes représentées sur l'image d'affichage. Si l'échelle l'image d'affichage ne représente que l'environnement proche véhicule, les informations sont lisibles mais l'utilisateur n'a pas les informations sur l'environnement lointain du véhicule.

L'invention vise à résoudre ce problème en proposant un procédé de fourniture d'image d'affichage et un système d'affichage cartographique de véhicule comprenant un module de génération d'image d'affichage, l'image d'affichage étant continue déformée et permettant à la fois d'afficher :
- l'environnement proche du véhicule avec la possibilité d'y ajouter des informations d'aide à la conduite,
- l'environnement lointain du véhicule permettant à l'utilisateur par exemple d'anticiper les prochains changements de direction ou les intersections.

L'environnement proche est l'environnement véhicule situé dans un rayon de quelques dizaines ou centaines de mètres par rapport au véhicule, typiquement 200 mètres.

L'environnement lointain est l'environnement véhicule situé au-delà de l'environnement proche, jusque dans un rayon de quelques milliers de mètres par rapport au véhicule, typiquement entre 500 mètres et 4000 mètres selon, par exemple, que le véhicule soit en ville ou à la campagne.

L'invention porte sur un procédé de fourniture d'affichage cartographique dans un véhicule, le véhicule comprenant un système d'aide à la conduite apte à détecter des informations environnementales autour du véhicule jusqu'à une distance de détection le procédé comprenant :
- une étape de détermination de la position géographique du véhicule,
- une étape d'accès à des données cartographiques correspondant à un environnement du véhicule en sa position géographique,
- une étape de génération d'une image d'affichage caractérisé en ce que l'image d'affichage comprend une première partie représentant une cartographie à une échelle prédéfinie d'une première zone de l'environnement véhicule et associée à un coefficient d'agrandissement de référence égal à 1, une deuxième partie représentant une cartographie d'une deuxième zone de l'environnement véhicule s'étendant depuis la distance de détection par rapport au véhicule jusqu'à une distance d'affichage par rapport au véhicule, la distance d'affichage représentant la limite d'un environnement lointain à afficher à un utilisateur, et délimitant la première zone et la deuxième zone, une troisième partie représentant une cartographie d'une troisième zone de l'environnement véhicule s'étendant depuis le véhicule jusqu'à la distance de détection, la troisième partie étant agrandie par rapport à la première partie avec un coefficient d'agrandissement prédéfini de manière à permettre l'affichage des informations environnementales, la deuxième partie étant déformée par rapport la première partie avec un coefficient d'agrandissement intermédiaire variant progressivement de manière à ce que la première partie, la deuxième partie et la troisième partie forment une image d'affichage continue déformée.

Selon un aspect de l'invention, la troisième partie est localisée dans la moitié inférieure de l'image d'affichage.

Selon un aspect de l'invention, la distance de détection est inférieure à la distance d'affichage.

Selon un aspect de l'invention, la distance de détection est comprise entre 50 mètres et 300 mètres.

Selon un aspect de l'invention, la distance de détection est comprise entre 100 mètres et 200 mètres.

Selon un aspect de l'invention, la distance d'affichage est comprise entre 400 mètres et 5000 mètres.

Selon un aspect de l'invention, la distance d'affichage est comprise entre 500 mètres et 4000 mètres.

Selon un aspect de l'invention, le procédé de fourniture d'affichage cartographique comprend une étape de détermination de la distance de détection en fonction de la précision du système d'aide à la conduite.

Selon un aspect de l'invention, le procédé de fourniture d'affichage cartographique comprend une étape de détermination de la distance de détection en fonction de la capacité du système d'aide à la conduite de détecter ou non des informations environnementales.

Selon un aspect de l'invention, le procédé de fourniture d'affichage cartographique comprend une étape de détermination de la distance de détection en fonction de la distance à laquelle le système d'aide à la conduite est apte à détecter des informations environnementales.

Selon un aspect de l'invention, le coefficient d'agrandissement prédéfini est compris entre 0,4% et 2% de la distance d'affichage en mètres.

Selon un aspect de l'invention, la troisième partie comprend une partie principale et une partie de transition, le coefficient d'agrandissement prédéfini étant constant et égal à un coefficient d'agrandissement principal sur la partie principale, le coefficient d'agrandissement prédéfini variant de manière décroissante sur la partie de transition.

Selon un aspect de l'invention, le coefficient d'agrandissement prédéfini varie linéairement sur la partie de transition.

Selon un aspect de l'invention, le coefficient d'agrandissement prédéfini de la partie de transition varie entre le coefficient d'agrandissement principal et un coefficient d'agrandissement de détection égal à une valeur comprise entre 70% et 90% du coefficient d'agrandissement principal.

Selon un aspect de l'invention, la partie principale représente une cartographie d'une zone principale s'étendant depuis le véhicule jusqu'à une distance principale par rapport au véhicule, la distance principale étant égale à une valeur comprise entre 50% et 75% de la distance de détection.

Selon un aspect de l'invention, le coefficient d'agrandissement principal est compris entre 0,5% et 2% de la distance d'affichage en mètres.

Selon un aspect de l'invention, la deuxième partie comprend une partie de décroissance et une partie de croissance, le coefficient d'agrandissement intermédiaire variant de manière décroissante sur la partie de décroissance entre le coefficient d'agrandissement prédéfini et un coefficient d'agrandissement de densification, le coefficient d'agrandissement intermédiaire variant de manière croissante sur la partie de croissance entre le coefficient d'agrandissement de densification et la valeur 1.

Selon un aspect de l'invention, le coefficient d'agrandissement intermédiaire varie de manière linéaire sur la partie de décroissance.

Selon un aspect de l'invention, le coefficient d'agrandissement intermédiaire varie de manière linéaire sur la partie de croissance.

Selon un aspect de l'invention, le coefficient d'agrandissement de densification est inférieur à 1.

Selon un aspect de l'invention, le coefficient d'agrandissement de densification est compris entre 0,6 et 0,8.

Selon un aspect de l'invention, la partie de croissance représente une cartographie d'une zone de croissance s'étendant depuis une distance de densification par rapport au véhicule jusqu'à la distance d'affichage par rapport au véhicule, la distance de densification étant égale à une valeur comprise entre 20% et 40% de la distance d'affichage.

Selon un aspect de l'invention, le procédé de fourniture d'affichage cartographique comprend une étape de détermination de la distance d'affichage en fonction de la position géographique du véhicule, la distance d'affichage variant en fonction de la position géographique du véhicule.

Selon un aspect de l'invention, le procédé de fourniture d'affichage cartographique comprend une étape de détermination de la distance d'affichage en fonction du type de route de circulation du véhicule.

Selon un aspect de l'invention, le procédé de fourniture d'affichage cartographique comprend une étape de détermination de la distance d'affichage en fonction d'un événement routier.

Un événement routier est par exemple l'approche ou la traversée d'un rondpoint, d'une intersection, d'un péage d'autoroute, d'une sortie d'autoroute, des abords d'une école, d'une salle de spectacle ou d'un gymnase, un changement de direction, le signalement d'un véhicule stationné sur le bas-côté de la route de circulation du véhicule, la présence d'un obstacle sur la route...

Selon un aspect de l'invention, le procédé de fourniture d'affichage cartographique comprend une étape de détermination de la distance d'affichage en fonction d'une densité d'informations à indiquer sur l'image d'affichage.

L'invention se rapporte également à un système d'affichage cartographique de pour un véhicule, le véhicule comprenant un système d'aide à la conduite apte à détecter des informations environnementales autour du véhicule jusqu'à une distance de détection, le système d'affichage cartographique comprenant :
- un module de détermination de la position géographique du véhicule,
- un module d'accès à des données cartographiques d'un environnement du véhicule,
- un module de génération d'une image d'affichage comprenant une première partie représentant une cartographie à une échelle prédéfinie d'une première zone de l'environnement véhicule et associée à un coefficient d'agrandissement de référence égal à 1, une deuxième partie représentant une cartographie d'une deuxième zone de l'environnement véhicule s'étendant depuis la distance de détection par rapport au véhicule et jusqu'à une distance d'affichage par rapport au véhicule, la distance d'affichage représentant la limite d'un environnement lointain à afficher à un utilisateur, et délimitant la première zone et la deuxième zone, une troisième partie représentant une cartographie d'une troisième zone de l'environnement véhicule s'étendant depuis le véhicule jusqu'à la distance de détection, la troisième partie étant agrandie par rapport la première partie avec un coefficient d'agrandissement prédéfini de manière à permettre l'affichage des informations environnementales, la deuxième partie étant déformée par rapport à la première partie avec un coefficient d'agrandissement intermédiaire variant progressivement de manière à ce que la première partie, la deuxième partie et la troisième partie forment une image d'affichage continue déformée,
- un dispositif d'affichage de l'image d'affichage.

L'invention se rapporte également à un produit programme d'ordinateur comprenant des instructions de programme mettant en oeuvre au moins l'étape de génération d'une image d'affichage, lorsque les instructions de programme sont exécutées par un ordinateur.

D'autres avantages et caractéristiques de l'invention apparaîtront à la lecture de la description et des dessins qui sont :
- figure 1, une représentation d'un environnement véhicule comprenant trois zones,
- figure 2, une représentation d'une image d'affichage comprenant trois parties représentant les trois zones de la figure 1,
- figure 3, une représentation du coefficient d'agrandissement en fonction des parties de l'image d'affichage,
- figure 4a, une image d'affichage selon l'invention,
- figure 4b, une image d'affichage de l'état de la technique.

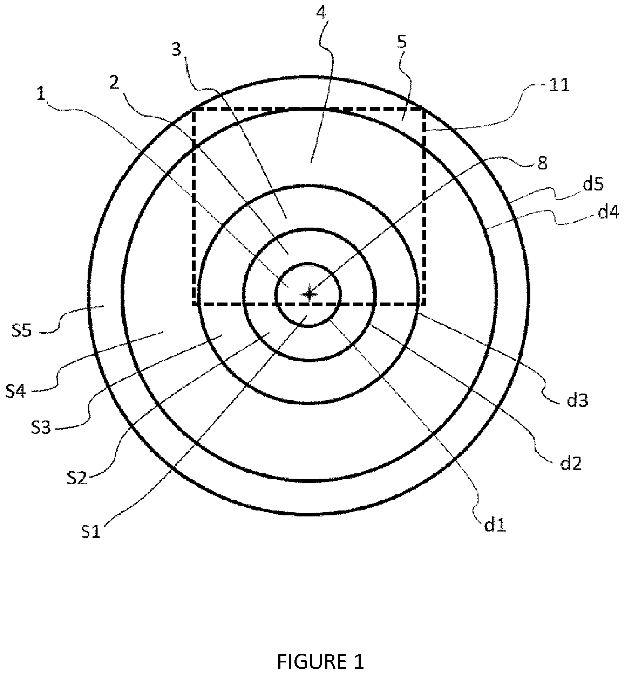

La figure 1 représente l'environnement du véhicule 8.

Par défaut et sauf mention contraire, les distances décrites ci-après sont mesurées par rapport au véhicule 8.

L'environnement du véhicule 8 comprend :
- le véhicule 8,
- une première zone 5 s'étendant depuis une distance d'affichage d4 jusqu'à une distance d'horizon d5,
- une deuxième zone 3, 4 s'étendant depuis une distance de détection d2 jusqu'à la distance d'affichage d4,
- une troisième zone 1, 2 s'étendant depuis le véhicule 8 jusqu'à la distance de détection d2.

La distance d'affichage d4 délimite un environnement lointain à afficher à un utilisateur du véhicule. La distance d'affichage d4 est comprise entre 400 mètres et 5000 mètres, typiquement entre 500 mètres et 4000 mètres.

La distance d'horizon d5 est la distance maximale au véhicule qui est représentée sur l'image d'affichage. Sur l'image d'affichage on représente plus que la distance d'affichage d4 par exemple parce-que l'écran d'affichage apte à afficher l'image d'affichage est de forme rectangulaire et que la distance d'affichage d4 est une ligne courbe de rayon d4 et de centre le véhicule. L'environnement de véhicule affiché dans la première zone ne comprend pas des informations utiles au conducteur pour la conduite du véhicule.

La distance de détection d2 le véhicule correspond à la limite de détection d'informations environnementales par le système d'aide à la conduite.

La troisième zone 1, 2 comprend :
- une zone principale 1 s'étendant depuis le véhicule 8 jusqu'à une distance principale d1,
- une zone de transition 2 s'étendant depuis la distance principale d1 jusqu'à la distance de détection d2.

La distance principale d1 délimite l'environnement immédiat du véhicule et dans lequel se trouvent les principales informations d'aide à la conduite à afficher.

La deuxième zone 3, 4 comprend :
- une zone de décroissance 3 s'étendant depuis la distance de détection d2 jusqu'à une distance de densification d3,
- une zone de croissance 4 s'étendant depuis la distance de densification d3 jusqu'à la distance d'affichage d4.

La distance de densification d3 correspond à la distance du véhicule dont la représentation sur l'image d'affichage est affichée de la manière la plus dense.

Les distances d1-d5 sont mesurées à partir du véhicule 8 et délimitent les zones 1-5 susmentionnées de l'environnement véhicule qui sont concentriques par rapport au véhicule 8.

Les cercles que forment les distances d1-d5 tout autour du véhicule 8 définissent des secteurs S1-S5 concentriques.

La région 11 est l'environnement du véhicule dont on souhaite afficher une cartographie à l'utilisateur.

Les zones 1-5 sont les morceaux de secteurs S1-S5 compris dans la région 11.

La distance principale d1 est inférieure à la distance de détection d2.

La distance de détection d2 est inférieure à la distance de densification d3.

La distance de densification d3 est inférieure à la distance d'affichage d4.

La distance d'affichage d4 est inférieure à la distance d'horizon d5.

Le véhicule comprend un système d'aide à la conduite apte à détecter des informations environnementales autour du véhicule jusqu'à la distance de détection d2.

La troisième zone 1, 2 est la zone de détection du système d'aide à la conduite.

La distance de détection d2 varie par exemple en fonction de :
- la performance du système d'aide à la conduite,
- la capacité du système d'aide à la conduite de détecter ou non des informations environnementales,
- la distance à laquelle le système d'aide à la conduite est apte à détecter des informations environnementales,

La distance de détection d2 associée à la troisième zone 1,2 est égale à une valeur comprise entre 50 mètres et 300 mètres, de préférence comprise entre 100 mètres et 200 mètres.

Si le système d'aide à la conduite est anormalement limité par une faible distance à laquelle il est apte à détecter des informations environnementales, par exemple à cause de mauvaises conditions météorologiques, alors la distance de détection d2 est choisie proche de la valeur minimale de la plage de valeurs susmentionnée, c'est-à-dire par exemple entre 50 mètres et 100 mètres.

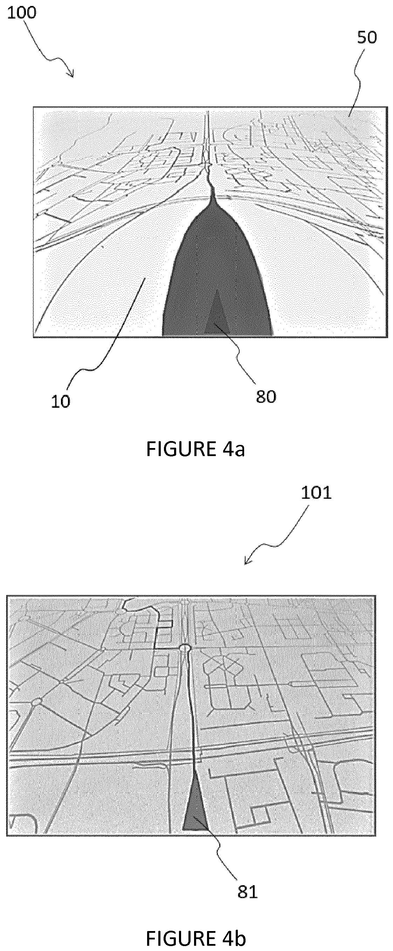

Si le système d'aide à la conduite n'est pas apte à détecter des informations environnementales, le procédé de l'invention peut être désactivé et une image d'affichage standard peut être générée, conformément par exemple à la figure 4b.

Au contraire, si le système d'aide à la conduite est performant et apte à détecter les voies et les véhicules environnants et n'est pas anormalement limité par la distance à laquelle il est apte à détecter des informations environnementales, alors la distance de détection d2 est choisie proche de la valeur maximale de la plage de valeurs susmentionnée, c'est-à-dire par exemple entre 200 mètres et 300 mètres.

La distance principale d1 est égale à une valeur comprise entre 50% et 75% de la distance de détection d2. Ainsi, la distance principale d1 est égale à une valeur comprise entre 50 mètres et 75 mètres lorsque la distance de détection d2 est égale à 100 mètres. La distance principale d1 est égale à une valeur comprise entre 100 mètres et 150 mètres lorsque la distance de détection d2 est égale à 200 mètres.

La distance d'affichage d4 est comprise entre 400 mètres et 5000 mètres, de préférence comprise entre 500 mètres et 4000 mètres.

La distance d'affichage d4 est choisie en fonction de la position géographique du véhicule 8.

Lorsque le véhicule 8 est sur autoroute ou en ville, la distance d'affichage d4 est choisie dans la plage basse de valeurs, par exemple entre 400 mètres et 1000 mètres.

Lorsque le véhicule 8 est à la campagne, par exemple circulant sur une route nationale, la distance d'affichage d4 est choisie dans la plage haute de valeurs, par exemple entre 1000 mètres et 5000 mètres.

La distance de densification d3 est égale à une valeur comprise entre 20% et 40% de la distance d'affichage d4. La distance de densification d3 est donc égale à une valeur comprise entre 100 mètres et 200 mètres lorsque la distance d'affichage d4 est égale à 500 mètres. La distance de densification d3 est donc égale à une valeur comprise entre 800 mètres et 1600 mètres lorsque la distance d'affichage d4 est égale 4000 mètres.

La distance d'horizon d5 est supérieure à la distance d'affichage d4. Elle est la distance maximale par rapport au véhicule, dans la région 11.

La distance d'horizon d5 dépend de la forme et de la taille de l'image d'affichage 100.

La distance d'horizon d5 est paramétrée grâce au positionnement dans l'espace d'une caméra virtuelle et à son angle d'inclinaison. La caméra virtuelle est placée derrière le véhicule, à une altitude et avec un angle d'inclinaison définissant un champ de vision au sol d'une distance d'horizon d5. La caméra virtuelle est par placée au-dessus et derrière le véhicule, l'angle d'inclinaison variant entre 15° et 35° pour faire varier la distance d'horizon de 400 mètres à 6000 mètres.

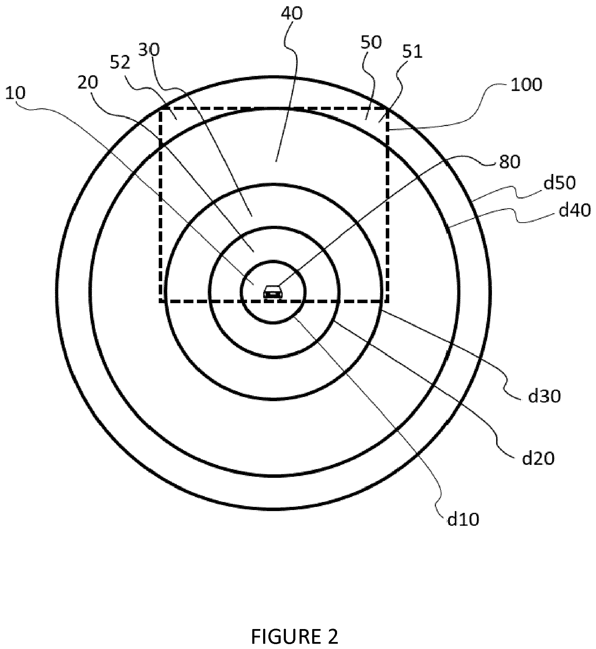

La figure 2 représente une image d'affichage 100 comprenant plusieurs parties 10-50. L'image d'affichage 100 représente une cartographie de la région 11 de l'environnement véhicule de la figure 1.

Les parties 10-50 de l'image d'affichage 100 représentent une cartographie des zones 1-5 de l'environnement véhicule.

La première partie 50 de l'image d'affichage 100 représente une cartographie de la première zone 5 de l'environnement véhicule.

La deuxième partie 30, 40 de l'image d'affichage 100 représente une cartographie de la deuxième zone 3, 4 de l'environnement véhicule.

La troisième partie 10, 20 de l'image d'affichage 100 représente une cartographie de la troisième zone 1, 2 de l'environnement véhicule.

La partie décroissante 30 de l'image d'affichage 100 représente une cartographie de la zone décroissante 3 de l'environnement véhicule.

La partie croissante 40 de l'image d'affichage 100 représente une cartographie de la zone croissante 4 de l'environnement véhicule.

La partie de transition 20 de l'image d'affichage 100 représente une cartographie de la zone de transition 2 de l'environnement véhicule.

La partie principale 10 de l'image d'affichage 100 représente une cartographie de la zone principale 1 de l'environnement véhicule.

Les distances d1-d5 tout autour du véhicule 8 délimitant les secteurs S1-S50 et les zones 1-5 dans la région 11 sur la figure 1 correspondent aux lignes principale d10, de détection d20, de densification d30, d'affichage minimal d40, d'horizon d50 sur la figure 2. Les lignes d10-d50 sont des délimitations entre les parties 1-5 dans l'image d'affichage 100.

Sur la figure 2, la première partie 50 est scindée en deux sous parties 51, 52. Cela est la conséquence de la position et de la forme de l'image d'affichage 100 par rapport à la ligne d'affichage minimal d40.

La première partie 50 de l'image d'affichage 100 peut être continue.

L'image d'affichage 100 et la région 11 correspondante sont rectangulaires. Cette forme n'est pas limitative. L'image d'affichage 100 et la région 11 correspondante peut être par exemple trapézoïdale, ronde ou triangulaire.

De préférence, le véhicule 8 est représenté sur l'image d'affichage 100 par un symbole ou un pictogramme 80.

De préférence, le pictogramme 80 est localisé sensiblement au milieu et en bas de l'image d'affichage 100.

De préférence, la troisième partie 10, 20 est localisée sensiblement au milieu et en bas de l'image d'affichage 100, en particulier dans la moitié inférieure de l'image d'affichage 100. Les termes bas et inférieur sont à interpréter par rapport au référentiel du véhicule lorsqu'il est normalement roulant ou stationné.

La première partie 50 représente une cartographie à une échelle prédéfinie de la première zone 5 de l'environnement véhicule. Par exemple, 1000 mètres dans l'environnement véhicule correspondent à 1 centimètre sur la première partie 50 de l'image d'affichage 100.

On associe à cette première partie 50 un coefficient d'agrandissement de référence égal à 1. Cela permet de définir de manière relative dans quelle mesure les deuxième partie 30 , 40 et troisième partie 10, 20 sont déformées c'est-à-dire agrandies ou rétrécies, respectivement avec un coefficient de grandissement supérieur ou inférieur à 1, par rapport à la première partie 50.

L'échelle cartographique n'est donc pas constante sur l'image d'affichage. L'échelle cartographique est prédéfinie et égale à une valeur constante sur toute la première partie 50. L'échelle cartographique varie sur les deuxième partie 30, 40 et troisième partie 10, 20 selon un coefficient multiplicateur égal au coefficient d'agrandissement associé à auxdites deuxième partie 30 , 40 et troisième partie 10, 20, par rapport à la première partie 50.

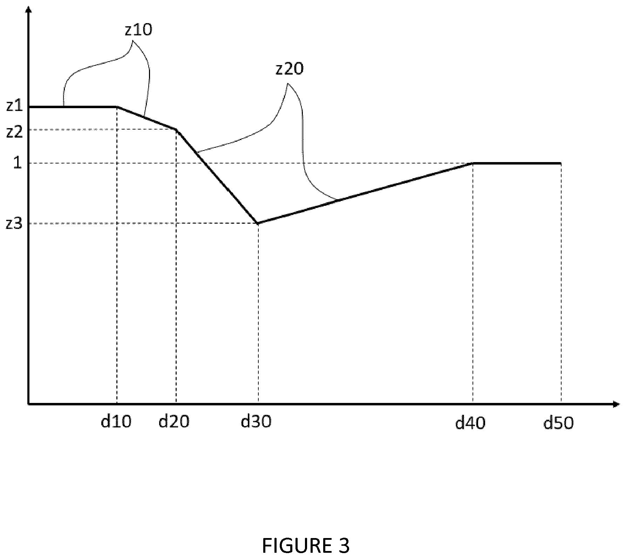

Comme illustré sur la figure 3, la deuxième partie 30, 40 et la troisième partie 10, 20 sont déformées par rapport à la première partie 50.

Le coefficient d'agrandissement est égal à 1 sur la première partie 50, c'est-à-dire entre la ligne d'affichage minimal d40 et la ligne d'horizon d50.

La troisième partie 10, 20 est agrandie par rapport à la première partie 50 avec un coefficient d'agrandissement prédéfini z10.

La troisième partie 10, 20 est la partie de l'image d'affichage agrandie avec le plus grand coefficient d'agrandissement. Cela permet de privilégier la représentation de l'environnement proche du véhicule 8 et de pouvoir y ajouter des informations pertinentes pour l'utilisateur.

Le coefficient d'agrandissement prédéfini z10 est compris entre 0,4% et 2% de la distance d'affichage d4 en mètres.

Le coefficient d'agrandissement prédéfini z10 est compris entre 2 et 10 lorsque la distance d'affichage d4 est égale à 500 mètres. Dans ce cas, si 1000 mètres dans l'environnement véhicule correspondent à 1 centimètre sur la première partie 50 de l'image d'affichage 100, alors 100 mètres dans l'environnement véhicule correspondent à entre 0,2 centimètre et 1 centimètre sur la troisième partie 10, 20 de l'image d'affichage 100.

Le coefficient d'agrandissement prédéfini z10 est compris entre 16 et 80 lorsque la distance d'affichage d4 est égale à 4000 mètres. Dans ce cas, si 4000 mètres dans l'environnement véhicule correspondent à 1 centimètre sur la première partie 50 de l'image d'affichage 100, alors 400 mètres dans l'environnement véhicule correspondent à entre 1,6 centimètre et 8 centimètres sur la troisième partie 10, 20 de l'image d'affichage 100.

De préférence, le coefficient d'agrandissement prédéfini z10 est constant et égal à un coefficient d'agrandissement principal z1 sur la partie principale 10, le coefficient d'agrandissement prédéfini z10 varie de manière décroissante sur la partie de transition 20.

La partie de transition 20, associée à un coefficient d'agrandissement prédéfini z10 variant de manière décroissante, permet d'assurer un bon compromis entre la visibilité d'affichage et la surface d'affichage de la cartographie de la fin de la troisième zone 2.

De préférence, le coefficient d'agrandissement principal z1 sur la partie principale 10 est égal à une valeur comprise entre 0,5% et 2% de la distance d'affichage d4 en mètres, encore de préférence égal à une valeur comprise entre 0,8% et 1,2% de la distance d'affichage d4 en mètres, de manière typique égal à 1% de la distance d'affichage d4 en mètres.

Le coefficient d'agrandissement prédéfini z10 de la partie de transition 20 varie entre le coefficient d'agrandissement principal z1 et un coefficient d'agrandissement de détection z2 égal à une valeur comprise entre 70% et 90% du coefficient d'agrandissement principal z1, de manière typique égal à 80% de la distance d'affichage d4 en mètres.

De manière typique, pour une distance d'affichage d4 égale à 500 mètres, le coefficient d'agrandissement principal z1 est égal à 5 et le coefficient d'agrandissement de détection z2 est égal à 4. Dans ce cas, si 1000 mètres dans l'environnement véhicule correspondent à 1 centimètre sur la première partie 50 de l'image d'affichage 100, alors 100 mètres dans l'environnement véhicule correspondent à 0,5 centimètre sur toute la partie principale 10 et 0,4 centimètre sur la ligne de détection d20 de l'image d'affichage 100.

De manière typique, pour une distance d'affichage d4 égale à 4000 mètres, le coefficient d'agrandissement principal z1 est égal à 40 et le coefficient d'agrandissement de détection z2 est égal à 32. Dans ce cas, si 4000 mètres dans l'environnement véhicule correspondent à 1 centimètre sur la première partie 50 de l'image d'affichage 100, alors 400 mètres dans l'environnement véhicule correspondent à 4 centimètres sur toute la partie principale 10 et 3,2 centimètre sur la ligne de détection d20 de l'image d'affichage 100.

De préférence, le coefficient d'agrandissement prédéfini z10 varie linéairement sur la partie de transition 20.

La variation linéaire du coefficient d'agrandissement prédéfini z10 n'est pas limitative. La variation peut être de forme par exemple logarithmique ou exponentielle.

La deuxième partie 30, 40 est déformée par rapport à la première partie 50 avec un coefficient d'agrandissement intermédiaire z20.

De préférence, le coefficient d'agrandissement intermédiaire z20 varie de manière décroissante sur la partie de décroissance 30 entre le coefficient d'agrandissement prédéfini z10 et un coefficient d'agrandissement de densification z3 et le coefficient d'agrandissement intermédiaire z20 varie de manière croissante sur la partie de croissance 40 entre le coefficient d'agrandissement de densification z3 et la valeur 1.

Le coefficient d'agrandissement de densification z3 est compris entre 0,6 et 0,8, de manière typique égal à 0,7. Le coefficient d'agrandissement de densification z3 étant inférieur à 1, cela correspond à une réduction. Le coefficient d'agrandissement de densification z3 est donc équivalent à un coefficient de réduction.

La deuxième partie 30, 40, associée à un coefficient d'agrandissement intermédiaire z20 variant de manière décroissante puis croissante et passant par une valeur inférieure à 1, permet un affichage condensé de la deuxième zone 3,4, dans laquelle les informations sont moins utiles pour l'utilisateur, en particulier là où le coefficient d'agrandissement intermédiaire z20 est minimum, c'est-à-dire lorsqu'il est égal au coefficient d'agrandissement de densification z3.

De manière typique, si 1000 mètres dans l'environnement véhicule correspondent à 1 centimètre sur la première partie 50 de l'image d'affichage 100, alors 1000 mètres dans l'environnement véhicule correspondent à 0,7 centimètre sur la ligne de densification d30 de l'image d'affichage 100.

De manière préférentielle, le coefficient d'agrandissement intermédiaire z20 varie de manière linéaire sur la partie de décroissance.

De manière préférentielle, le coefficient d'agrandissement intermédiaire z20 varie de manière linéaire sur la partie de croissance.

La variation linéaire du coefficient d'agrandissement intermédiaire z20 n'est pas limitative. La variation peut être de forme par exemple logarithmique ou exponentielle.

Etant donné qu'il n'y a pas de rupture entre les coefficients d'agrandissements des différentes parties 10-50, c'est-à-dire que le coefficient d'agrandissement varie de manière continue sur toute l'image d'affichage 100, l'image d'affichage 100 de l'invention est continue déformée, comme illustré sur la figure 4a.

L'image d'affichage 100 est déformée parce-que l'échelle à laquelle est représenté l'environnement véhicule sur l'image d'affichage 100, n'est pas constante.

L'image d'affichage 100 est continue parce-que l'échelle à laquelle est représenté l'environnement véhicule sur l'image d'affichage 100, évolue de manière progressive, et les parties 10-50 de l'image d'affichage 100 représentent des zones 1-5 adjacentes.

Sur la figure 4a, le véhicule est représenté par un symbole triangulaire 80. La partie principale 10 est agrandie par rapport à la première partie 50.

La figure 4b représente une image d'affichage 101 de l'état de la technique. Le véhicule est représenté par un symbole triangulaire 81. L'image 101 représente un environnement véhicule à une échelle constante prédéfinie.

L'invention concerne également un système d'affichage cartographique (non représenté) de véhicule 8 comprenant :
- un module de détermination de la position géographique du véhicule 8,
- un module d'accès à des données cartographiques d'un environnement du véhicule 8,
- un module de génération d'une image d'affichage 100 continue déformée, telle que décrite précédemment,
- un dispositif d'affichage de l'image d'affichage 100.

Le module de détermination de la position géographique du véhicule 8 comprend un géolocalisateur, par exemple un dispositif de localisation par satellite.

Le module d'accès à des données cartographiques d'un environnement du véhicule 8, comprend un module émetteur et récepteur apte à accéder à des données cartographiques stockées sur un serveur informatique externe au véhicule 8, en fonction de la position géographique du véhicule 8.

Le module de génération d'une image d'affichage 100 continue déformée comprend un module électronique de traitement de données apte par exemple à reconstruire une cartographie en trois dimensions à partir de données cartographiques et à déplacer des points de maillage de la cartographie pour créer des déformations.

D'autre techniques connues de l'homme du métier peuvent être utilisées pour créer des déformations sur une cartographie, par exemple en utilisant des affichages à base de vecteurs.

Le dispositif d'affichage est par exemple un écran du tableau de bord du véhicule 8, un écran distinct du tableau de bord du véhicule 8 ou une portion du pare-brise.

Les modules et dispositifs décrits ci-dessus communiquent entre eux par des liaisons filaires, par exemple par une liaison de type CAN (acronyme de « Controller Area Network » en anglais), LIN (acronyme de «Local Interconnect Network » en anglais), éthernet ou par des moyens de communication sans fil.

L'image d'affichage 100 de l'invention permet de mettre en valeur les éléments les plus pertinents pour l'utilisateur.

La troisième partie 10, 20 de l'image d'affichage est agrandie avec le plus grand coefficient d'agrandissement. Cela permet d'afficher de manière lisible des informations environnementales détectées par le système d'aide à la conduite ou des données cartographiques :
- des informations sous forme de texte, par exemple des noms de rue, de ville, de route, des durées de parcours, d'embouteillage, des distances de sécurité...
- des pictogrammes ou symboles représentant par exemple des panneaux de signalisation, les autres véhicules de l'environnement véhicule, des obstacles, des dangers...

L'image d'affichage 100 de l'invention est continue déformée, ce qui permet un rendu visuel plus naturel et plus lisible pour l'utilisateur qu'une image d'affichage subdivisée en plusieurs représentations de l'environnement véhicule à des échelles différentes.

L'image d'affichage 100 déformée selon l'invention permet de représenter une cartographie d'un environnement de véhicule sans perte d'information cartographique entre le véhicule et un point cible, tout en affichant de manière visible des informations environnementales issues d'un système d'aide à la conduite.

## Revendications

1. Procédé de fourniture d'affichage cartographique dans un véhicule (8), le véhicule (8) comprenant un système d'aide à la conduite apte à détecter des informations environnementales autour du véhicule (8) jusqu'à une distance de détection (d2) le procédé comprenant :
- une étape de détermination de la position géographique du véhicule (8),
- une étape d'accès à des données cartographiques correspondant à un environnement du véhicule en sa position géographique,
- une étape de génération d'une image d'affichage (100) **caractérisé en ce que** l'image d'affichage (100) comprend une première partie (50) représentant une cartographie à une échelle prédéfinie d'une première zone (5) de l'environnement véhicule et associée à un coefficient d'agrandissement de référence égal à 1, une deuxième partie (30, 40) représentant une cartographie d'une deuxième zone (3, 4) de l'environnement véhicule s'étendant depuis la distance de détection (d2) par rapport au véhicule (8) jusqu'à une distance d'affichage (d4) par rapport au véhicule (8), la distance d'affichage (d4) représentant la limite d'un environnement lointain à afficher à un utilisateur, et délimitant la première zone (5) et la deuxième zone (3,4), une troisième partie (10, 20) représentant une cartographie d'une troisième zone (1, 2) de l'environnement véhicule s'étendant depuis le véhicule (8) jusqu'à la distance de détection (d2), la troisième partie (10, 20) étant agrandie par rapport à la première partie (50) avec un coefficient d'agrandissement prédéfini (z10) de manière à permettre l'affichage des informations environnementales, la deuxième partie (30, 40) étant déformée par rapport la première partie (50) avec un coefficient d'agrandissement intermédiaire (z20) variant progressivement de manière à ce que la première partie (50), la deuxième partie (30, 40) et la troisième partie (10, 20) forment une image d'affichage (100) continue déformée.

2. Procédé de fourniture d'affichage cartographique selon la revendication précédente, **caractérisé en ce que** le coefficient d'agrandissement prédéfini (z10) est compris entre 0,4% et 2% de la distance d'affichage (d4) en mètres.

3. Procédé de fourniture d'affichage cartographique selon l'une quelconque des revendications précédentes, **caractérisé en ce que** la troisième partie (10, 20) comprend une partie principale (10) et une partie de transition (20), le coefficient d'agrandissement prédéfini (z10) étant constant et égal à un coefficient d'agrandissement principal (z1) sur la partie principale (10), le coefficient d'agrandissement prédéfini (z10) variant de manière décroissante sur la partie de transition (20).

4. Procédé de fourniture d'affichage cartographique selon la revendication précédente, **caractérisé en ce que** le coefficient d'agrandissement prédéfini (z10) de la partie de transition (20) varie entre le coefficient d'agrandissement principal (z1) et un coefficient d'agrandissement de détection (z2) égal à une valeur comprise entre 70% et 90% du coefficient d'agrandissement principal (z1).

5. Procédé de fourniture d'affichage cartographique selon l'une quelconque des revendications 4 ou 5, **caractérisé en ce que** la partie principale (10) représente une cartographie d'une zone principale (1) s'étendant depuis le véhicule (8) jusqu'à une distance principale (d1) par rapport au véhicule (8), la distance principale (d1) étant égale à une valeur comprise entre 50% et 75% de la distance de détection (d2),

6. Procédé de fourniture d'affichage cartographique selon l'une quelconque des revendications précédentes, **caractérisé en ce que** la deuxième partie (30, 40) comprend une partie de décroissance (30) et une partie de croissance (40), le coefficient d'agrandissement intermédiaire (z20) variant de manière décroissante sur la partie de décroissance (30) entre le coefficient d'agrandissement prédéfini (z10) et un coefficient d'agrandissement de densification (z3) permettant un affichage condensé de la deuxième zone (3, 4), le coefficient d'agrandissement intermédiaire (z20) variant de manière croissante sur la partie de croissance (40) entre le coefficient d'agrandissement de densification (z3) et la valeur 1.

7. Procédé de fourniture d'affichage cartographique selon la revendication précédente, **caractérisé en ce que** le coefficient d'agrandissement de densification (z3) est inférieur à 1, de préférence compris entre 0,6 et 0,8.

8. Système d'affichage cartographique de véhicule (8) pour un véhicule (8) comprenant un système d'aide à la conduite apte à détecter des informations environnementales autour du véhicule (8) jusqu'à une distance de détection (d2), le système d'affichage cartographique comprenant :
- un module de détermination de la position géographique du véhicule (8),
- un module d'accès à des données cartographiques d'un environnement du véhicule (8),
- un module de génération d'une image d'affichage comprenant une première partie (50) représentant une cartographie à une échelle prédéfinie d'une première zone (5) de l'environnement véhicule et associée à un coefficient d'agrandissement de référence égal à 1, une deuxième partie (30, 40) représentant une cartographie d'une deuxième zone (3, 4) de l'environnement véhicule s'étendant depuis la distance de détection (2) par rapport au véhicule (8) et jusqu'à une distance d'affichage (d4) par rapport au véhicule (8), la distance d'affichage (d4) représentant la limite d'un environnement lointain à afficher à un utilisateur, et délimitant la première zone (5) et la deuxième zone (3,4), une troisième partie (10, 20) représentant une cartographie d'une troisième zone (1, 2) de l'environnement véhicule s'étendant depuis le véhicule (8) jusqu'à la distance de détection (d2), la troisième partie (10, 20) étant agrandie par rapport la première partie (50) avec un coefficient d'agrandissement prédéfini (z10) de manière à permettre l'affichage des informations environnementales, la deuxième partie (30, 40) étant déformée par rapport à la première partie (50) avec un coefficient d'agrandissement intermédiaire (z20) variant progressivement de manière à ce que la première partie (50), la deuxième partie (30, 40) et la troisième partie (10, 20) forment une image d'affichage (100) continue déformée,
- un dispositif d'affichage de l'image d'affichage (100).

9. Produit programme d'ordinateur comprenant des instructions de programme mettant en oeuvre au moins l'étape de génération d'une image d'affichage selon l'une quelconque des revendications 1 à 8, lorsque les instructions de programme sont exécutées par un ordinateur.
